(19)

Europäisches
Patentamt
European
Patent Office
Office européen
des brevets

(11) **EP 2 192 391 A1**

(12) **EUROPEAN PATENT APPLICATION**

(43) Date of publication:
**02.06.2010 Bulletin 2010/22**

(51) Int Cl.:
*G01F 1/88* $^{(2006.01)}$     *G01F 25/00* $^{(2006.01)}$
*G01F 1/44* $^{(2006.01)}$     *G01F 1/74* $^{(2006.01)}$

(21) Application number: **08170400.9**

(22) Date of filing: **01.12.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicants:
- **Services Pétroliers Schlumberger
  75007 Paris (FR)**
  Designated Contracting States:
  **FR**
- **Schlumberger Technology B.V.
  2514 JG The Hague (NL)**
  Designated Contracting States:
  **BG CZ DE DK GR HU IE IT LT NO PL RO SI SK TR**
- **Schlumberger Holdings Limited
  Tortola (VG)**
  Designated Contracting States:
  **GB NL**
- **PRAD Research And Development Limited
  Road Town, Tortola (VG)**
  Designated Contracting States:
  **AT BE CH CY EE ES FI HR IS LI LU LV MC MT PT SE**

(72) Inventors:
- **Pinguet, Bruno**
  **58140, Lormes (FR)**
- **Theron, Bernard**
  **Aberdeen**
  **AB21 0GW**
  **(GB)**
- **Parry, Andrew**
  **92340, Bourg la Reine (FR)**

(74) Representative: **Hyden, Martin Douglas**
  **Rouse Patents**
  **1st Floor**
  **228-240 Banbury Road**
  **Oxford**
  **Oxfordshire OX2 7BY (GB)**

(54) **Apparatus and a method of measuring the flow of a fluid**

(57) An apparatus and method for determination of the mass flow rate of a multi-phase fluid flowing through a conduit, the apparatus comprising a venturi being located in the conduit; and wherein a first differential pressure measurement device is in communication with the multi-phase fluid between a first position and a second position across the venturi and is able to measure a first fluid differential pressure, a second differential pressure measurement device is in communication with the multi-phase fluid between a third position and a fourth position across the venturi and is able to measure a second fluid differential pressure, a processor is connected to the first and second differential pressure measurement devices, the processor being able to calculate the Reynolds number and the discharge coefficient using the first and second fluid differential pressures measured by the connected first and second differential pressure measurement devices, respectively, and the processor being able to calculate the mass flow rate by using the calculated Reynolds number and discharge coefficient.

EP 2 192 391 A1

Figure 1

**Description**

Technical field

This invention relates to an apparatus and a method of measuring the mass flow rate of a fluid. In particular, the invention relates to a flow meter apparatus and a method of measuring the mass flow rate of a fluid particularly for use in measuring the mass flow rate of a multi-phase fluid flow.

Background art

The invention generally relates to flow rate measurements using differential pressure based flow meters with applications in the oil and gas, as well as food industries, but with particular application to multi-phase fluid flow and heavy oil fluid flow.

The standard ISO 5167 describes the manufacture, application and installation requirements of differential pressure based flow measurement devices. Typically different types of measurement devices include an orifice plate, a nozzle and a venturi tube which are inserted in conduits having a circular cross-section. The venturi tube has the advantage of low overall pressure loss offered and tolerance to erosion and particles flowing through the venturi tube.

In the art there are many types of venturi flow meters having different configurations, flow regimes and multi-phase applications. Venturi flow meters are also used in gas-condensate or wet-gas flows. Multiple differential pressure sensors have been employed to infer the split between the gas and the wet part of the gas (i.e. condensate).

US Patent No. 7,293,471 describes a flow meter for measuring fluid mixtures. The invention is directed to a flow meter that obtains the individual flow rates of gas, liquid hydrocarbons, and water in a predominantly gas-containing flowing fluid mixture. One of the elements of the flow meter comprises a double differential pressure generating and measuring structure. Using a calibration model, the ratio of the two differential pressure measurements is used to determine the Lockhart-Martinelli parameter. The Lockhart-Martinelli parameter expresses the liquid fraction of a flowing fluid.

US Patent No. 6,502,467 describes a system for measuring multi-phase flow using multiple pressure differentials. The invention is directed to a method and system for measuring a multi-phase flow in a pressure flow meter. An extended throat venturi tube is used and pressure of the multi-phase flow is measured at three or more positions in the venturi, which define two or more pressure differentials in the flow conduit. The differential pressures are then used to calculate the mass flow of the gas phase, the total mass flow, and the liquid phase.

US Patent No. 6,935,189 describes an apparatus and method for measuring multi-phase flow using at least two venturis and a pressure dropping means located between the two venturis. The two venturis in combination with a water fraction meter are used to determine the mass flow of the gas phase, the oil, and the water.

One of the problems with devices and methods described in the cited references is that they do not measure with sufficient accuracy the mass flow rate of multi-phase fluids, particularly when dealing with high viscosities. There are also other problems with the above devices and methods.

One of the advantages of this invention is that it is able to measure the mass flow rate with more sufficient accuracy than the existing devices and methods currently found in the art. A further advantage of the invention is that it can measure the mass flow rate sufficiently accurately with multi-phase fluids having high viscosities. The present invention overcomes these problems and provides an improved method and apparatus in light of the prior art.

A further advantage of the apparatus and method of determination of the mass flow rate of a fluid flowing through a conduit of the present invention is that it allows the calculation of the mass flow rate, $q_m$, of multi-phase fluid especially in high viscous fluids without the need for sampling and measuring the viscosity. It is also advantageous over the prior art because it does not require an iterative method by which to determine the mass flow rate, but provides a direct method for the determination of the mass flow rate.

Disclosure of the invention

A first aspect of the invention provides an apparatus for determination of the mass flow rate of a multi-phase fluid flowing through a conduit, the apparatus comprising:

- a venturi being located in the conduit;
- wherein a first differential pressure measurement device is in communication with the multi-phase fluid between a first position and a second position across the venturi and is able to measure a first fluid differential pressure;
- a second differential pressure measurement device is in communication with the multi-phase fluid between a third position and a fourth position across the venturi and is able to measure a second fluid differential pressure;
- a processor is connected to the first and second differential pressure measurement devices, the processor being able to calculate the Reynolds number and the discharge coefficient using the first and second fluid differential pressures measured by the connected first and second differential pressure measurement devices, respectively; and

- the processor being able to calculate the mass flow rate by using the calculated Reynolds number and discharge coefficient.

The venturi may include a converging section, a throat section and a diverging section. The venturi may generally be described as a short tube with a constricted throat used to determine fluid pressures and velocities by measurement of differential pressures generated at the throat as a fluid traverses the tube.

In one form of the invention there may be more than two differential pressure measurement devices.

The first position of the first differential pressure measurement device may be upstream of the venturi. The second position of the first differential pressure measurement device may be at the throat section of the venturi.

The third position of the second differential pressure measurement device may be at the throat section of the venturi.

In one form of the invention the fourth position of the second differential pressure measurement device may be between the throat section and the diverging section of the venturi. In another form of the invention the fourth position of the second differential pressure measurement device may be between the throat section of the venturi and the diverging section of the venturi downstream of the throat section.

Further according to the invention the third position of the second differential pressure measurement device may be between upstream of the venturi and the converging section situated upstream of the throat of the venturi. In this form of the invention the fourth position of the second differential pressure measurement device may be at the throat section of the venturi.

Even further according to the invention the third position of the second differential pressure measurement device may be upstream of the venturi. In this form of the invention the fourth position of the second differential pressure measurement device may be between the throat section and the diverging section of the venturi. Alternatively, in this form of the invention the fourth position of the second differential pressure measurement device may be between the throat section of the venturi and the diverging section of the venturi downstream of the throat section.

Further according to the invention the venturi may be a V-cone, a wedge or a nozzle.

A second aspect of the invention provides an in-line method for determination of the mass flow rate of a multi-phase fluid flowing through a conduit, the method comprising:

- positioning a venturi, a first pressure differential pressure measurement device and a second differential pressure measurement device in the conduit;
- measuring a first differential pressure between a first position and a second position across the venturi by means of the first differential pressure measurement device;
- measuring a second differential pressure between a third position and a fourth position across the venturi by means of the second differential pressure measurement device;
- processing the first differential pressure and the second differential pressure measured by means of a processor in communication with the first and the second differential pressure measurement devices;
- calculating the Reynolds number and the discharge coefficient by means of the processor; and
- calculating the mass flow rate by means of the processor, and by using the calculated Reynolds number and discharge coefficient.

Preferably, method allows the determination of the mass flow rate of a multi-phase fluid flowing through a conduit to be calculated directly by the processor.

Further according to the invention, the method may include measuring the density of the multi-phase fluid. In one aspect of the invention, the density of the multi-phase fluid may be measured by gamma ray attenuation as described in U.S. Pat. No. 6,405,604, which is hereby incorporated by reference.

Even further according to the invention, the method may include measuring the viscosity of the multi-phase fluid.

The venturi may include a converging section, a throat section and a diverging section.

In one form of the invention there may be more than two differential pressure measurement devices placed in the conduit.

According to a third aspect of the invention there is provided an in-line method for determination of the mass flow rate of a multi-phase fluid flowing through a conduit, the method comprising:

- directly calculating the Reynolds number and the discharge coefficient by means of the processor in an apparatus as described above; and
- calculating the mass flow rate by means of the processor, and by using the calculated Reynolds number and discharge coefficient.

Further aspects of the invention will be apparent from the following description.

Brief description of the drawings

Figure 1 shows a schematic side view of a prior art venturi flow meter. The venturi flow meter comprises an inlet pipe, convergent section, throat, divergent, and outlet pipe. The differential pressure is measured between the inlet pipe and the throat;

Figure 2 shows a prior art chart of an empirical relationship for the discharge coefficient as a function of Reynolds number. The chart is used to read-off the value of discharge coefficient corresponding to a Reynolds number according to the prior art;

Figure 3 shows a prior art flow diagram of the iterative procedure followed for the calculation of the mass flow rate of a fluid using a prior art venturi flow meter. This flow diagram shows the prior art procedure to obtain mass flow rate in a viscous, low Reynolds number, fluid flow;

Figure 4 shows a schematic side view of an apparatus having a supplementary differential pressure measurement between throat and downstream region of a venturi according to a first embodiment of the present invention. The density of the fluid is measured by an independent device located in the throat or at another location;

Figure 5 shows a chart of an empirical relationship for the Reynolds number as a function of $\Delta p_2/\Delta p$ according to the first embodiment of invention. This chart provides explicit means to determine the Reynolds number;

Figure 6 shows a flow diagram of the direct procedure for mass flow rate determination according to the first embodiment of the invention. The flow diagram shows the steps required to determine the mass flow rate including the use of the explicit curve expressing the Reynolds number, Re as a function of the quotient $\Delta p_2/\Delta p$;

Figure 7 shows a schematic side view of an apparatus having a supplementary differential pressure measurement between a position on convergent region and throat of a venturi according to a second embodiment of the present invention;

Figure 8 shows a chart of an empirical relationship for Reynolds number as a function of $\Delta p_3/\Delta p$ according to the second embodiment of the invention. This chart provides explicit means to determine the Reynolds number;

Figure 9 shows a schematic side view of an apparatus having a supplementary differential pressure measurement between upstream and downstream pipe work from a venturi according to a third embodiment of the present invention; and

Figure 10 shows a chart of an empirical relationship for Reynolds number as a function of $\Delta p_4/\Delta p$ according to the third embodiment of the invention. This chart provides explicit means to determine the Reynolds number.

Mode(s) for carrying out the invention

The present invention provides an apparatus and method for measuring the mass flow rate ($q_m$) of a multi-phase fluid flow. The apparatus and the method are particularly useful for high viscosity multi-phase fluids.

The apparatus according to the invention is an in-line apparatus and it is used to determine the Reynolds number, Re, and the discharge coefficient, $C_d$, of a venturi applied to multi-phase fluid flow, and based on using multiple pressure differentials. Preferably, a single venturi tube and at least two pressure differential measurements are used to determine the Reynolds number and discharge coefficient, and from those variables the mass flow rate, $q_m$, of the multi-phase fluid flow may be determined.

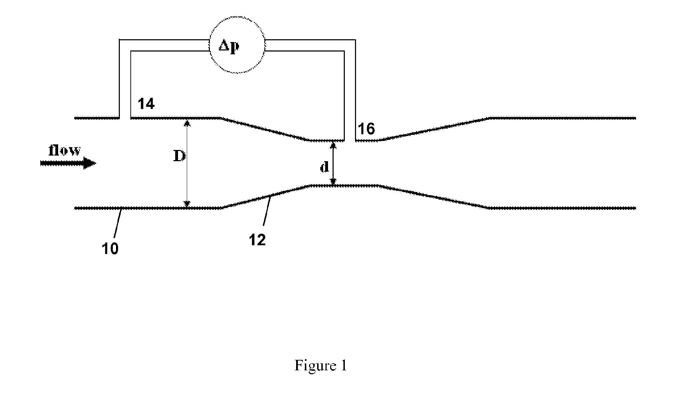

A schematic side view of a prior art example of a conduit 10 having a venturi 12 and the associated differential pressure measurement, $\Delta p$, is shown in Figure 1. The differential pressure is measured by a pressure sensor 14 near the conduit taking a pressure measurement of the fluid and a pressure sensor 16 near the venturi taking a pressure measurement of the fluid, and then a calculation being made of the change in the pressure between these two positions. In this example, the mass flow-rate, $q_m$, is calculated from the differential pressure measurement, $\Delta p$, using the known relationship:

$$q_m = \frac{C_d S_f \varepsilon A_d}{\sqrt{1 - \beta^4}} \sqrt{2\rho\Delta p} \tag{1}$$

where, $C_d$, is the discharge coefficient, $S_f$, is the multi-phase flow regime parameter, $\varepsilon$ is the gas expansion factor, $\beta = d/D$, $A_d = \pi d^2/4$, $\rho$ is the fluid density, d is the throat diameter and D is the inlet pipe diameter. Typically the density may be measured by a number of well known techniques such as but not limited to sampling, a nuclear densitometer, such as gamma ray attenuation, or using an equation of state to infer density from pressure and temperature.

It is generally accepted that the discharge coefficient, $C_d$, is a function of the Reynolds number, Re, as shown below:

$$C_d = f(\mathrm{Re}) \qquad\qquad (2)$$

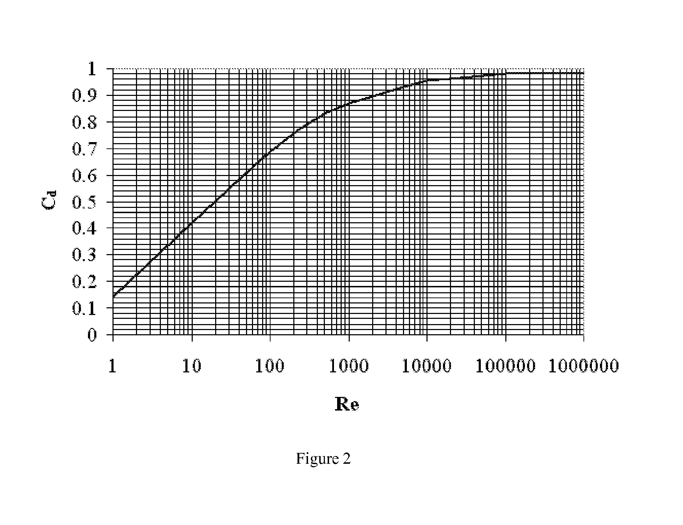

where Re $= \rho UD / \mu = 4q_m /\pi D\mu$, $\mu$ is the fluid viscosity and $U$ is the mean fluid velocity measured at a cross section of the inlet pipe having a diameter D. The relationship in equation (2) is determined experimentally. An example of a typical empirical curve for discharge coefficient as a function of Reynolds number is shown in Figure 2. It can be seen that the discharge coefficient is not constant and that the variation becomes significant at low Reynolds numbers that are indicative of highly viscous fluids.

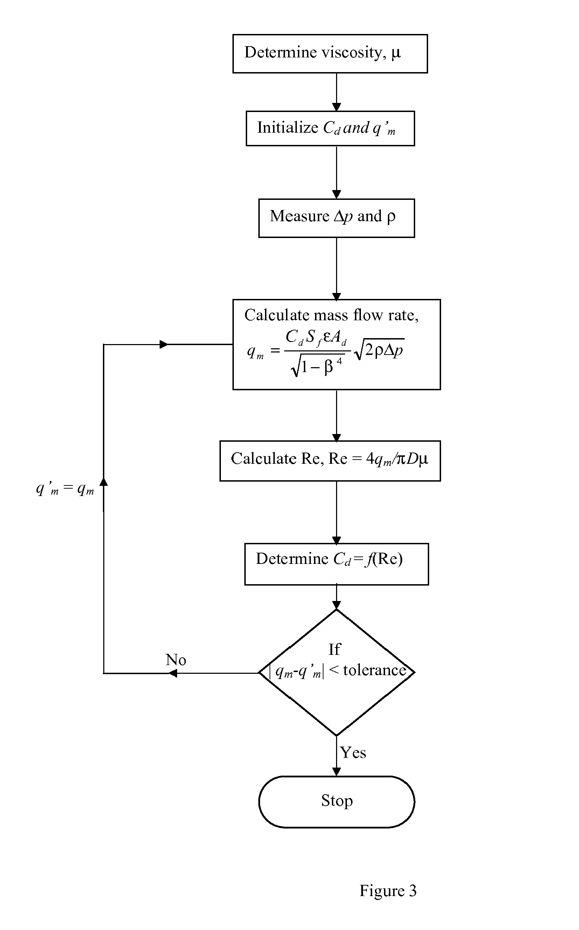

The mass flow rate for this example discussed above is determined by using an iterative method, as shown in the flow diagram of Figure 3. The procedure assumes knowledge or measurement of the viscosity of the fluid. The discharge coefficient and mass flow rate is initialised before an iterative procedure is applied to determine the mass flow rate taking into account the effect of Reynolds number on the discharge coefficient. The differential pressure and density of the fluid are measured. As described in U.S. Pat. No. 6,405,604, which is incorporated herein by reference, the density of the multi-phase fluid may be measured by gamma ray attenuation at a first energy level at a frequency $f_2$ that is high relative to said frequency of gas/liquid alternation in a slug flow regime, and the mean of the measurements obtained in this way over each period $t_1$ corresponding to the frequency $f_1$ is formed to obtain said mean density value.

The mass flow rate is updated, allowing subsequent calculation of the Reynolds number and discharge coefficient. If the mass flow rate is not converged then the mass flow rate is re-calculated followed by a recalculation of Reynolds number and re-determination of discharge coefficient. The iteration loop is repeated until convergence of the mass flow rate is obtained.

The viscosity can be determined when in a controlled environment or under laboratory conditions. However, in field conditions the requirement for sampling and measurement of viscosity are becoming more difficult and challenging, since corrections are required to be applied to the measured viscosity of the sample due to differences between line and sample temperature, pressure and effects of dissolved gas.

In multi-phase fluid flow and wet gas fluid flow applications the determination of viscosity is further complicated by the presence of several phases in the fluid. The viscosity of a mixture of oil and water could lead to a mixture having a viscosity several times higher than the viscosity of the oil on its own, due to emulsion effects. Thus the phase volume fractions become further necessary parameters for the characterisation of the viscosity.

The current invention provides an apparatus and the method for in-line determination of the mass flow rate of a multi-phase fluid flowing through a conduit. The in-line determination of the mass flow rate is obtained from the in-line determination of discharge coefficient and Reynolds number, which are in turn obtained from the measurement of at least two fluid differential pressures measured across a venturi by means of two or more differential pressure measurement devices.

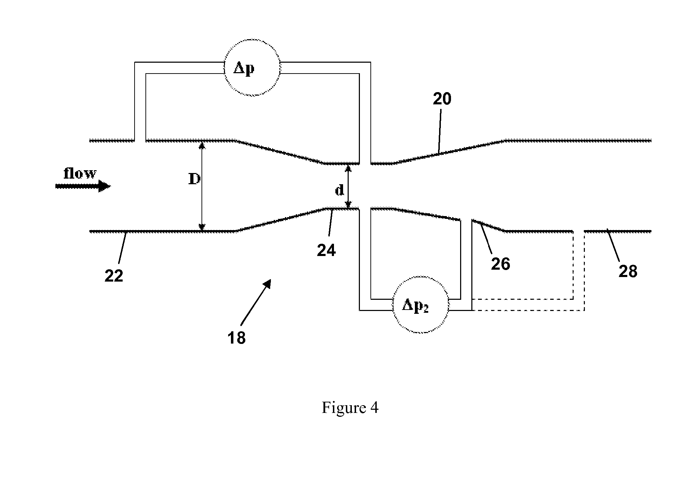

An apparatus 18 according to a first embodiment of the invention is shown in Figure 4. Apparatus 18 includes a venturi 20 with a fluid differential pressure measurement, $\Delta p$, made by a first differential pressure measurement device (not shown). The differential pressure measurement, $\Delta p$, is taken at the cross-section of the inlet pipe 22, upstream of the venturi 20, having a diameter D and the cross-section of throat 24 of the venturi 20 having a diameter d. It also includes a supplementary second fluid differential pressure measurement, $\Delta p_2$, taken by a second differential pressure measurement device (not shown). The differential pressure measurement, $\Delta p$, is taken between the cross-section of the throat 24 having a diameter d and the cross-section in the diverging section 26 of the venturi 20 downstream of the throat 24. Alternatively, as shown in Figure 4, the second differential pressure measurement can be taken between the throat 24 of the venturi 20 and the outlet pipe 28 having a cross section D.

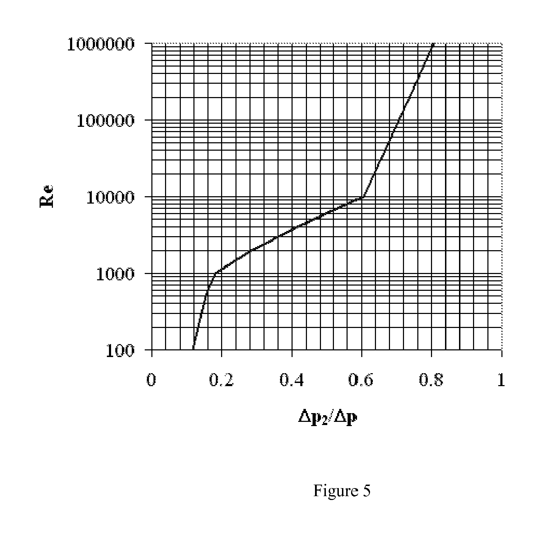

Figure 5 shows a chart of an empirical relationship for the Reynolds number as a function of $\Delta p_2/\Delta p$. This chart provides an explicit means by which to determine the Reynolds number for the apparatus 18 as shown in Figure 4. The chart belongs to one venturi or differential pressure element configuration and is applicable to a range of fluid properties and fluid flow regimes. The chart in Figure 5 can be obtained experimentally by measuring $\Delta p$, $\Delta p_2$, $q_m$, $\rho$ and $\mu$ under controlled conditions. This data can then by transformed to provide a chart where Re $= g(\Delta p_2/ \Delta p)$.

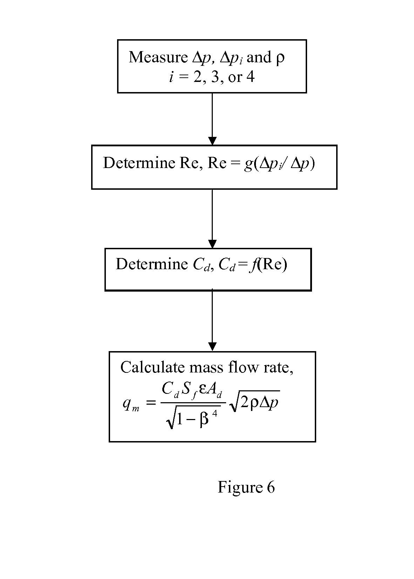

The invention also provides an improved apparatus and method for measuring the mass flow rate of a highly viscous multi-phase fluid. The method includes the steps as shown in the flow chart of Figure 6. Firstly the measurements of $\Delta p$, $\Delta p_2$ and $\rho$ are carried out using the apparatus 18, as shown in Figure 4. The Reynolds number is then determined using the relationship, Re$=g(\Delta p_2/\Delta p)$, which is created as discussed previously. The discharge coefficient is then determined by using the relationship, $C_d = f(\mathrm{Re})$. The mass flow rate can then be calculated by using Equation (1).

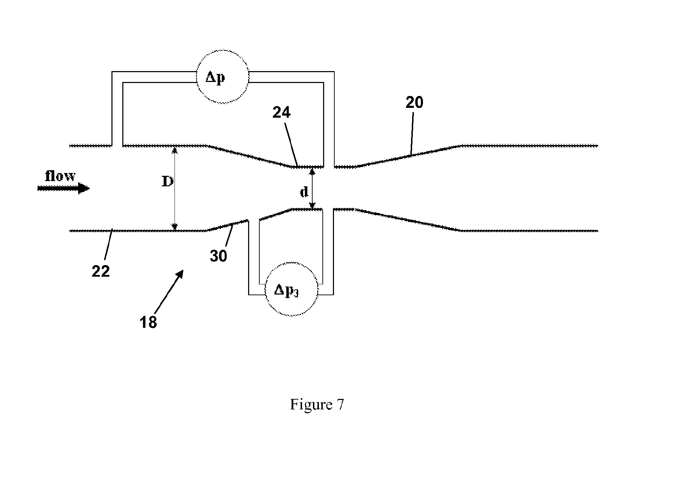

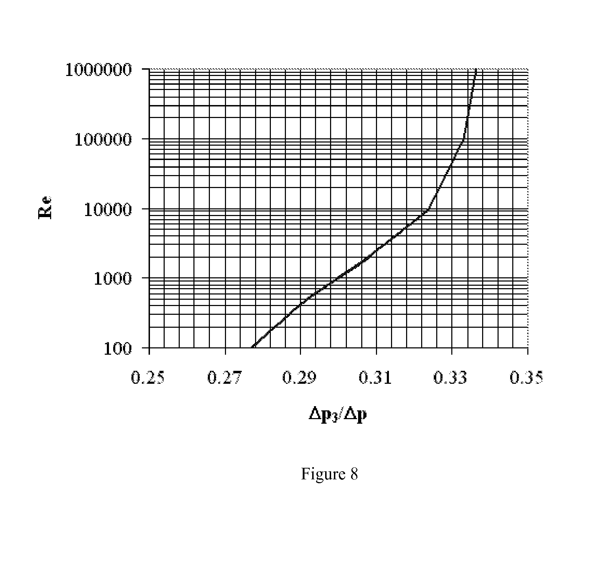

Figure 7 shows a second embodiment of the apparatus according to the invention. In this configuration apparatus 18 also includes a venturi 20 with a fluid differential pressure measurement, $\Delta p$, which is taken by a first differential pressure measurement device (not shown), at the cross-section of the inlet pipe 22 having a diameter D and the cross-section of throat 24 of the venturi 20 having a diameter d. Apparatus 18 further includes a second fluid differential pressure measurement, $\Delta p_3$, which is taken by a second differential pressure measurement device (not shown), between the inlet pipe 22 of diameter D and the converging section 30 situated upstream of the throat 24. Figure 8 shows a chart of an empirical relationship for Reynolds number as a function of $\Delta p_3/\Delta p$ for this second embodiment of the invention. This chart provides explicit means by which to determine the Reynolds number. The chart is also determined experimentally, similarly to that as described for the first embodiment of the invention.

The method by which to determine the mass flow rate in the first embodiment of the apparatus according to the invention is similar to that of the second embodiment of the apparatus according to the invention. The same flow chart is used for the procedure, but the Reynolds number relationship for the second embodiment of the apparatus is now $Re=g(\Delta p_3/\Delta p)$.

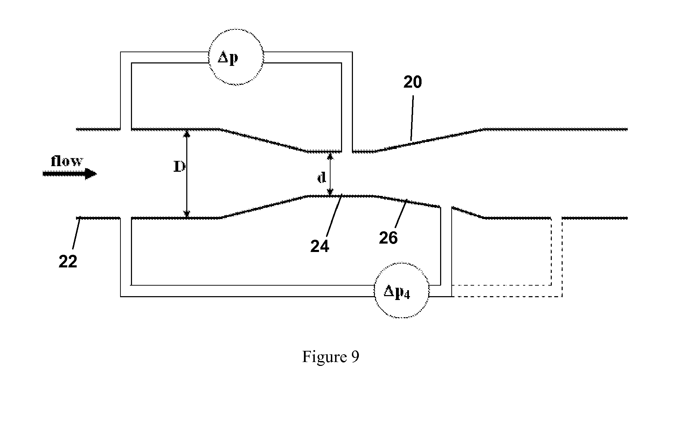

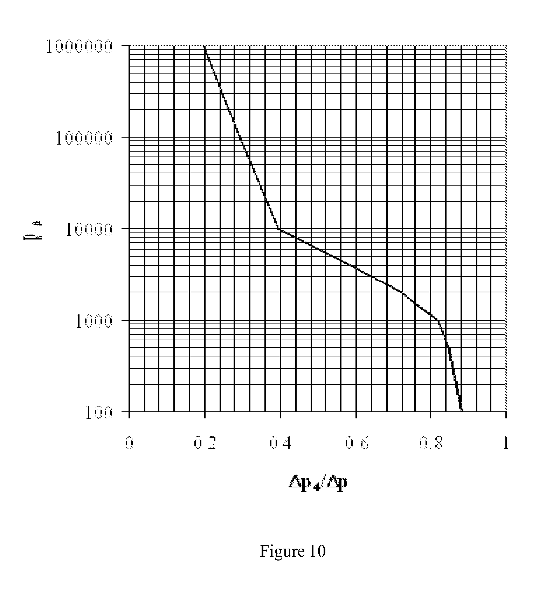

A third embodiment of the apparatus according to the invention is shown in Figure 9. In this configuration apparatus 18 also includes a venturi 20 with a fluid differential pressure measurement, $\Delta p$, which is taken by a first differential pressure measurement device (not shown), at the cross section of the inlet pipe 22 having a diameter D and the cross-section of throat 24 of the venturi 20 having a diameter d. Apparatus 18 further includes a second fluid differential pressure measurement, $\Delta p_4$, which is taken by a second differential pressure measurement device (not shown), between a position upstream at the cross section of the inlet pipe 22 and at the cross-section in the diverging section 26 of the venturi 20 downstream of the throat 24. Figure 10 shows a chart of an empirical relationship for Reynolds number as a function of $\Delta p_4/\Delta p$ for this third embodiment of the invention. This chart also provides explicit means to determine the Reynolds number, and it is also determined experimentally, similarly to that discussed in the first embodiment of the apparatus according to the invention.

The method by which the mass flow rate is determined when using the apparatus of the third embodiment of the invention is similar to that of the method by which the mass flow rate is determined when using the apparatus of the first embodiment of the invention. The same flow chart is used for the procedure, but the relationship for determining the Reynolds number is now $Re=g(\Delta p_4/\Delta p)$.

The apparatus and method for determination of the mass flow rate of a multi-phase fluid flowing through a conduit according to the invention may also incorporate the determination of the discharge coefficient and Reynolds number by using a plurality of supplementary differential pressure measurements. The venturi of the apparatus may further also include, for example, V-cones, wedges or nozzles.

This invention does not pre-suppose the orientation of the apparatus. The meter could be orientated at the horizontal, the vertical or it may be inclined. The hydrostatic effect in the apparatus could also be corrected at any time.

This invention is versatile and is applicable to fluid flow measurement in general and more particularly in the oil and gas, as well as the food industries.

While the present invention has been described with respect to a limited number of embodiments, those skilled in the art, having the benefit of this disclosure, will appreciate numerous modifications and variations therefrom. It is intended that the appended claims cover all such modifications and variations as fall within the true spirit and scope of this present invention.

**Claims**

1. An apparatus for measuring a mass flow rate of a multi-phase fluid flowing through a conduit, the apparatus comprising:

   - a venturi located in a conduit;
   - a first differential pressure measurement device in communication with said multi-phase fluid between a first position and a second position across said venturi for measuring a first fluid differential pressure;
   - a second differential pressure measurement device in communication with said multi-phase fluid between a third position and a fourth position across said venturi for measuring a second fluid differential pressure;
   - a processor in communication with said first and second differential pressure measurement devices for receiving said first and second fluid differential pressures, respectively, said processor calculating a Reynolds number and a discharge coefficient using said first and second fluid differential pressures; and
   - the processor calculating a mass flow rate by using said calculated Reynolds number and discharge coefficient.

2. The apparatus of claim 1, in which said multi-phase fluid comprises water, oil, and gas.

3. The apparatus of claim 1, in which said venturi comprises a converging section, a throat section and a diverging section.

4.  The apparatus as in any one of the preceding claims, in which there are more than two differential pressure measurement devices.

5.  The apparatus as in claim 3 or 4, in which said first position of said first differential pressure measurement device is upstream of said venturi.

6.  The apparatus as in any of claims 3 to 5, in which said second position of said first differential pressure measurement device is at said throat section of said venturi.

7.  The apparatus as in any of claims 3 to 6, in which said third position of said second differential pressure measurement device is at said throat section of said venturi.

8.  The apparatus as in any of claims 3 to 7, in which said fourth position of said second differential pressure measurement device is between said throat section and said diverging section of said venturi.

9.  The apparatus as in any of claims 3 to 7, in which said fourth position of said second differential pressure measurement device is between said throat section of said venturi and said diverging section of said venturi downstream of said throat section.

10. The apparatus as in any of claims 3 to 6, in which said third position of said second differential pressure measurement device is between upstream of said venturi and said converging section situated upstream of said throat of said venturi.

11. The apparatus of claim 10, in which said fourth position of said second differential pressure measurement device is at said throat section of said venturi.

12. The apparatus as in any of claims 3 to 6, in which said third position of said second differential pressure measurement device is upstream of said venturi.

13. The apparatus of claim 12, in which said fourth position of said second differential pressure measurement device is between said throat section of said venturi and said diverging section of said venturi.

14. The apparatus of claim 12, in which said fourth position of said second differential pressure measurement device is between said throat section of said venturi and said diverging section of said venturi downstream of said throat section.

15. The apparatus of claim 1, in which said venturi is a V-cone, a wedge or a nozzle.

16. A method for determining a mass flow rate of a multi-phase fluid flowing through a conduit using an apparatus as in any one of the preceding claims, wherein the method comprises the steps of:

    - directly calculating the Reynolds number and the discharge coefficient by means of the processor; and
    - calculating a mass flow rate by means of the processor, and by using the calculated Reynolds number and discharge coefficient.

17. A method for determining a mass flow rate of a multi-phase fluid flowing through a conduit, the method comprising the steps of:

    - positioning a venturi in a conduit;
    - measuring a first differential pressure between a first position and a second position across said venturi by means of a first differential pressure measurement device;
    - measuring a second differential pressure between a third position and a fourth position across said venturi by means of a second differential pressure measurement device;
    - processing said first differential pressure and said second differential pressure by means of a processor connected to said first and said second differential pressure measurement devices;
    - calculating a Reynolds number and a discharge coefficient by means of said processor; and
    - calculating said mass flow rate by means of said processor, and by using said Reynolds number and said discharge coefficient.

18. The method of claim 17, further comprising the step of measuring a density of said multi-phase fluid.

19. The method of claim 18, in which said density is measured by gamma ray attenuation.

20. The method as in any of claims 17 to 19, further comprising the step of measuring a viscosity of said multi-phase fluid.

21. The method as in any of claims 17 to 20, in which said multi-phase fluid comprises water, oil, and gas.

22. The method as in any of claims 17 to 21, in which said venturi comprises a converging section, a throat section and a diverging section.

23. The method as in any of claims 17 to 22, in which there is more than two differential pressure measurement devices.

Figure 1

Figure 2

Figure 3

Figure 4

Figure 5

Measure $\Delta p$, $\Delta p_i$ and $\rho$
$i = 2, 3,$ or $4$

Determine Re, Re $= g(\Delta p_i / \Delta p)$

Determine $C_d$, $C_d = f(\text{Re})$

Calculate mass flow rate,

$$q_m = \frac{C_d S_f \varepsilon A_d}{\sqrt{1 - \beta^4}} \sqrt{2\rho\Delta p}$$

Figure 6

Figure 7

Figure 8

Figure 9

Figure 10

Europäisches
Patentamt

European
Patent Office

Office européen
des brevets

**EUROPEAN SEARCH REPORT**

Application Number

EP 08 17 0400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 6 502 467 B1 (FINCKE JAMES R [US])<br>7 January 2003 (2003-01-07)<br>* column 5 - column 6; figure 1 *<br>* column 12, line 44 - line 47 *<br>----- | 1-23 | INV.<br>G01F1/88<br><br>ADD.<br>G01F25/00<br>G01F1/44<br>G01F1/74 |
| A | WO 00/14484 A (TEXAS A & M UNIV SYS [US])<br>16 March 2000 (2000-03-16)<br>* page 4, line 29 - page 5, line 15 *<br>* page 8, line 31 - page 9, line 29; figure 1 *<br>* page 11, line 32 - line 34 *<br>* page 12, line 31 - page 16, line 12 *<br>* page 24, line 1 - page 25, line 9 *<br>----- | 1-23 | |
| D,A | US 6 405 604 B1 (BERARD MICHEL [FR] ET AL)<br>18 June 2002 (2002-06-18)<br>* column 3, line 28 - column 4, line 26 *<br>----- | 19 | |
| A | EP 1 081 472 A (GEN ELECTRIC [US])<br>7 March 2001 (2001-03-07)<br>* paragraph [0001] - paragraph [0006] *<br>* paragraphs [0011], [0012] *<br>* paragraph [0020] - paragraph [0022] *<br>----- | 1-23 | TECHNICAL FIELDS SEARCHED (IPC)<br><br>G01F |
| A | WO 98/52002 A (SOUTHWEST RES INST [US]; HATTON GREGORY J [US]; SVEDEMAN STEVEN J [US]) 19 November 1998 (1998-11-19)<br>* page 7, line 32 - page 8, line 14; figures 1,2 *<br>----- | 1-23 | |
| A | EP 0 749 004 A (SCHLUMBERGER LIMITED A NETHERL [US]; SCHLUMBERGER TECHNOLOGY BV [NL] S) 18 December 1996 (1996-12-18)<br>* page 4 - page 6; figure 4 *<br>----- | 1-23 | |

The present search report has been drawn up for all claims

| Place of search | Date of completion of the search | Examiner |
|---|---|---|
| The Hague | 11 May 2009 | Bourhis, J |

EPO FORM 1503 03.82 (P04C01)

## ANNEX TO THE EUROPEAN SEARCH REPORT
## ON EUROPEAN PATENT APPLICATION NO.

EP 08 17 0400

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2009

| Patent document cited in search report | | Publication date | Patent family member(s) | | Publication date |
|---|---|---|---|---|---|
| US 6502467 | B1 | 07-01-2003 | AU | 9509098 A | 12-04-1999 |
| | | | WO | 9915862 A1 | 01-04-1999 |
| | | | US | 6332111 B1 | 18-12-2001 |
| WO 0014484 | A | 16-03-2000 | AU | 6036999 A | 27-03-2000 |
| | | | CA | 2343021 A1 | 16-03-2000 |
| | | | NO | 20011222 A | 09-05-2001 |
| | | | US | 6345536 B1 | 12-02-2002 |
| | | | US | 6422092 B1 | 23-07-2002 |
| US 6405604 | B1 | 18-06-2002 | AU | 748341 B2 | 06-06-2002 |
| | | | AU | 9532498 A | 16-03-1999 |
| | | | DE | 69816096 D1 | 07-08-2003 |
| | | | DZ | 2592 A1 | 22-02-2003 |
| | | | WO | 9910712 A1 | 04-03-1999 |
| | | | EP | 1009975 A1 | 21-06-2000 |
| | | | FR | 2767919 A1 | 05-03-1999 |
| EP 1081472 | A | 07-03-2001 | CZ | 20002087 A3 | 13-02-2002 |
| | | | JP | 2001082991 A | 30-03-2001 |
| | | | KR | 20010020975 A | 15-03-2001 |
| | | | US | 6352001 B1 | 05-03-2002 |
| WO 9852002 | A | 19-11-1998 | AU | 7384498 A | 08-12-1998 |
| EP 0749004 | A | 18-12-1996 | AR | 002491 A1 | 25-03-1998 |
| | | | AU | 710440 B2 | 23-09-1999 |
| | | | AU | 5596796 A | 02-01-1997 |
| | | | CA | 2178988 A1 | 16-12-1996 |
| | | | DE | 69627422 D1 | 22-05-2003 |
| | | | EG | 20798 A | 29-03-2000 |
| | | | FR | 2735571 A1 | 20-12-1996 |
| | | | NO | 962546 A | 16-12-1996 |
| | | | OA | 10296 A | 19-09-1997 |
| | | | US | 5736650 A | 07-04-1998 |
| | | | ZA | 9605091 A | 22-01-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7293471 B
- US 6502467 B
- US 6935189 B
- US 6405604 B